# EUROPEAN PATENT SPECIFICATION

(11) **EP 1 578 660 B1**
(45) Date of publication and mention of the grant of the patent: **21.10.2009**
(21) Application number: 03812393.1
(22) Date of filing: 01.12.2003
(51) Int. Cl.: B63B 5/14

(54) **VESSEL STRUCTURES AND STRUCTURES IN MARINE VESSELS**
SCHIFFSKONSTRUKTIONEN UND KONSTRUKTIONEN IN WASSERFAHRZEUGEN
STRUCTURES DE NAVIRES ET STRUCTURES DE BATIMENTS DE MER

(30) Priority: 30.11.2002 GB 0228081; 30.11.2002 GB 0228083
(43) Date of publication of application: 28.09.2005
(60) Divisional application: 08170455.3
(73) Proprietor: Det Norske Veritas AS, 1322 Hovik (NO)
(72) Inventor: BERGAN, Pal G., N-1397 Nesoya (NO)
(74) Representative: Stein-Dräger, Christiane
(86) International application number: PCT/NO2003/000401
(87) International publication number: WO 2004/050468

(56) References cited:
- FR-A- 2 782 695
- JP-A- 57 026 076
- US-A- 4 706 319
- US-A- 4 715 307
- US-A- 5 713 296
- US-A- 6 009 821

## Description

The invention relates to a marine vessel, a layered structure for use in a marine vessel, a layered structure module, an element for obtaining a layered structure module, methods for producing the layered structure, and a method for improving the strength and carrying capacity of existing stiffened plate structures, corrugated structures and structures in general in marine vessels.

Most commercial and military ships today, with the exception of fast going surface effect ships, have a hull that is made purely of steel plates. The steel plates have two main functions, namely to serve as a water tight membrane against the sea and thereby provide buoyancy, and, second, to provide strength capacity needed for carrying environmental loads and loads from cargo, other functional loads etc. Structural steels may have very high strength; however, it is difficult to exploit the strength capacity fully because thin steel plates may suffer buckling in compression. The traditional way of increasing the buckling capacity of steel plates is to connect the plates with beams and frames, and to attach stiffeners in one or two directions as a plate field grid stiffening. Highly stressed corners and other details often are strengthened with additional bracings or supporting elements. For bulkheads which form separation walls between cargo holds in a ship an alternative stiffening principle is to form the wall plating with a channel-type corrugation and thereby achieving increased carrying capacity and stiffening for transverse loads. However, it must be realized that also corrugated plates may display severe forms of buckling even for transverse loading.

Looking at a typical steel ship design one is easily struck with the complexity and the many different structural members a ship is constructed from. In fact, for a large ship there may be as many as 100 000 steel pieces welded together to form the ship hull structure. This complexity is not only a matter of cutting and fitting together many pieces of steel, but, more importantly, it implies that highly extensive and expensive welding work has to be carried out. Welds between plates and stiffening elements are also critical zones for fatigue and fracturing. These welds, in addition to general corrosion, are the main factors determining the service life of a ship.

Another important design consideration for hull structures is their capacity for sustaining extreme and accidental loads. In this context three matters are particularly significant, namely the capability of absorbing energy from the accidental loads, the capability of redistribution of loads through structural redundancy, and the capability of maintaining water and cargo tightness in a damaged condition. In later years there have been introduced new national and international regulations to this end. For example, double hull design, i.e. double barriers between the oil tanks and the sea, has become mandatory for new tank ships. There is of course additional steel usage and costs associated with most of these new ship hull requirements, however, this is a price that safety and improved environmental performance demand.

New measures, as those described above, may also have implications beyond the problems that they are intended to deal with in the first place. The open space between the skins in a double hull is often used for storage of ballast water or fuel. These spaces with the plate field grid stiffening are often difficult to inspect and to clean. This has implications for detecting and repairing damage as well as it may be a source for contaminating ballast water.

There exist alternative ways of achieving enhanced safety and environmental performance including improved strength, collision resistance, reduction of stress concentrations where cracks may begin, reduced corrosion exposed surfaces, better cleaning of compartments, etc. For instance, it is known that relatively light and strong plate structures or structural components can be achieved through composite or "sandwich" plate construction. Composite plates and shells are extensively used in the field of aerospace, particularly with fibre reinforced plastics used in the surface skins and foam or "honeycomb" core materials.

Composite hulls and plate panels have also been used for ships. For instance, glass fibre reinforced plastic skins with foam plastic core or elastomers have been used for hull construction for small and moderately large, high speed light crafts. Moreover, there have been developed systems of prefabricated plate panels consisting of steel skins with internal elastomer core where the plate panels may be welded together along specially prepared edge frames made of steel. Composite panels have been used as separation walls, floors and car decks in the interior of ships. However, current regulations, such as SOLAS, may prevent use of highly combustible materials such as plastics from being used in large passenger vessels. It is also a fact that large ships built in such a way would be both rather expensive and may exhibit deformation beyond what normally would be acceptable. Another well known problem with plastic skin and foam designs for hulls is that there is a tendency for "delamination", i.e. separation between skins and core, during high intensity surface loading. This may severely damage the load carrying capacity and integrity of the hull.

From the discussion above it is evident that plastic skin-core composite construction is not immediately attractive for building large ship hulls. However, composite plate design is in principle structurally very efficient.

Another issue with existing vessel structures is that vast operational experience from the world's bulk carrier fleet indicates that corrugated bulkheads may be a weak link in the overall safety performance of bulk ships. There have been many cases with loss of older ships in which it has been suspected that the bulkheads have collapsed after water ingress into cargo holds leading to rapid bulkhead failure and sinking of the ship. It is thus of great importance to be able to provide efficient and cost-effective ways of strengthening existing bulk ships as well as other types of merchant vessels.

Earlier there have been made attempts to build marine vessels where the main part of the vessel comprises concrete and metal sheets. One example of this is given in US 1,240,129. In this example there is an outer, an intermediary, and an inner metal sheet and concrete filled in between the inner and the intermediary metal sheet. The only specification for the concrete to be used is that it is preferably of such a consistency that it may be poured into the space between the two sheets.

There are also other applications where concrete has been used in connection with marine vessels.

One other example is the marine use of the double skin composite panels described in US patent 5,741,571. The double skin panel comprise two steel facing plates joined together by a plurality of cross-members. A filler material, e.g. concrete is thereafter introduced into the spacing between the facing plates. The facing plates are prefabricated fastened together by the coss-members and delivered to building site without the concrete filling. The panels are put together with special mechanical devices. The concrete is poured into the void in between the facing plates after assembly. There are not set any requirements regarding the concretes properties. This double skin panels are in advertising suggested used for circular legs of semi-submersibles, suction anchor piles or submerged tube tunnels. The arguments for using this system are the lightweight of the facing plates when they are transported to the building site and the strength they give to the construction. It should be noted that typical concrete for this concept would be standard or normal concrete or in special cases light weight concrete as for instance used offshore in the North Sea, which concrete has a weight of 1900 kg/m³.

Concrete has also been used for other purposes in relation to marine structure. One use is in connection with strengthening a hull of a ship. One example of this is given in the publications SU 1646944, where one uses a cement adhesive layer on the metal hull, a layer of spiral wire netting embedded in a filler concrete layer which is limited by another layer of reinforced netting which on top has a coating layer of cement. Another example for strengthening a hull is given in US 6,009,821 where the hull of a tank ship is provided with a double hull requiring essentially no internal steel structural support by distributing and compacting sand in the bottom of the tank or cargo hold, applying a layer of reinforced concrete to the sand, laying steel plates on the surface of the cured concrete and welding the abutting edges of the plates to the hull. This example can only efficiently be used for the bottom of a hull in a ship, and gives no solution for the bulkheads or the side and deck structures. Both these procedures also consist of several steps and are, due to this, quite extensive in workload when executed.

A method more or less equal to these is also described in FR 2 478 015. It is descried that concrete is applied to areas where a metal sheet in contact with water should be repaired or improved. The concrete preferably has a specific weight of less than 1 and is applied in a layer of between 5 and 45 centimetre. The concrete layer may be armoured and there may be applied another tight layer in addition to the concrete.

Materials other than concrete have also been used for strengthening existing ship structures. For instance internal decks have been strengthened with a system of stiffener ribs with an upper cover plate made of steel filled with elastomer in the void spaces.

These known solutions are for repairing or improving the structures of an existing ship, which already have a steel structure that presumably is dimensioned for the forces that a ship may be exposed for. The requirements for both the steel sheets and the concrete use in these solutions will be significantly different from the requirements of the current invention where the whole ship hull, or parts of the ship, are built step by step and in assemblages of small and large structural modules, with a layered structure, or even cellular structure.

JP 57 026 076 A relates to a combined concrete panel and manufacturing method therefore. According to this disclosure, columnar steel fibre concrete layers and ordinary concrete layers are placed between a pair of face to face steel sheets provided with anchor members girder webs at the required spacing so that the ordinary concrete layers are located around the steel fibre concrete layers.

FR 2 782 695 Al relates to the realization of floating structures in lightweight concrete. Accordingly, a lightweight concrete with a density less than that of water is provided that has reinforcing structures provided on its outer sides, which reinforcing structures can be provided by armed concrete, metal, special paints etc.

The main purpose for the present invention is to achieve a new way for constructing the whole or part of a marine vessel with a layered structure and a method to produce such composite structures, which is competitive with traditional vessel design.

Another main purpose of the present invention is to provide a vessel where the different parts of for instance the hull have strength and stiffness properties which improve the integrity and overall performance in case of accidental loading, such as explosions, collision and grounding, in comparison with traditional single and double skin ship hull design, and to provide a vessel which has a improved safety against being wrecked compared with ordinary ships. Another aim is to provide a layered structure for use in for instance ships, which has enhanced environmental performance compared with ordinary single and even ordinary double hull ships. This refers to integrity and resistance against leakage of damaging cargos or fuels as well as the way ballast water may be dealt with in the ships structure.

A further aim is to provide a layered structure for use in ships that is advantageous as means for reducing the overall exposed surface area so that it becomes smooth with minimal corners and connections, so that emptying, cleaning and maintenance becomes easier, more efficient and thereby less costly. The overall area that needs corrosion protection is thereby also reduced. It is also an aim to provide a layered structure for use in ships that has good fire insulation properties and overall enhanced fire behaviour, and also have good properties in reducing noise and vibrations.

A further aim is to develop a layered structure that can be used for designing a whole vessel that will be economically competitive with conventional steel ships and that results in increased safety at sea. To achieve a layered structure with the necessary strength and stiffness properties, which at the same time uses significantly less steel and may be equally light or lighter than an equivalent steel structure for a ship is another aim. Finally, is it a goal to achieve a ship that is significantly less prone to fatigue cracking than a conventional ship, thereby reducing the need for maintenance and repairs, and resulting in enhanced design life.

It is also the aim of the invention to use the same principle at the invention to achieve a method to improve the carrying capacities of existing structures in various forms of constructions. One example of a construction is a marine vessel or ship consisting of an outer hull-, bulkheads- and deck-structure. Another aim is to achieve a strengthened corrugated plate, strengthened bulkhead or other type of shell or plate structure in a ship.

These aims are achieved with the invention as defined in the following claims.

The invention regards a marine vessel, such as ships, floating platform etc, where the whole of part(s) comprises a layered structure including two substantially parallel metal sheets with a concrete layer in between, where the concrete has density significantly less than that of normal concrete, preferably less than about 1200 kg/m³, where the layered structure is dimensioned as if the concrete layer in the structure can carry essentially no tension but is capable of carrying compressive forces.

A marine vessel may be any type and size of ships, for instance a bulk carrier, a tanker or a container ship or a barge or other types of boats. A marine vessel may also be a semi-submersible platform with or without propulsion devises, other seagoing structures or large floating, stationary structures. The marine vessel may be built totally with a layered structure in accordance with the invention or parts of the vessel may comprise a layered structure, for instance may the hull and bulkheads comprise a layered structure but the hopper tanks and the wing tanks may be formed with steel plates connected to the layered structure hull and bulkhead.

Another possibility might be to have just the outer hull with a layered structure, or only parts of the hull with a layered structure like the parts around the engine room. The layered structure comprises two metal sheets with a concrete layer in between. The concrete in the concrete layer may be denoted as an ultra lightweight concrete (ULWC) when it has density less than 1200 kg/m³ which is half of that of normal concrete which typically has a weight of about 2300 to 2500 kg/m³. The concrete layer in the layered structure is, when dimensioning the layered structure, assumed not to be able carry significant tension forces, and to transfer all the perpendicular pressure forces in the layered structure.

The outer layers of the layered structure may be made of any type of metal approved for ship applications by Classification Societies or other appropriate authorities. This includes typical ship plates made with steel qualities like "Normal Strength Steel" (NS) with minimum yield stress of 235 MPa, "High Strength Steel" (HS) with minimum yield stress of 265 MPa up to and including 390 MPa, and "Extra High strength Steel" (EHS) with minimum yield stress of 420 MPa up to and including 690 MPa. There exist a very large number of specific steel notations that fall within these classes of steel quality. Special alloys like austenitic and duplex stainless steel may also be used. Moreover, for special applications in a ship one may use so-called clad steel plates consisting of a base material and a thinner layer (cladding metal) on one or both sides, continuously and integrally bonded. Other metals like aluminium and titanium may also be used as long as they display sufficient compatibility with the structural and chemical behaviour of the light weight concrete core material.

The core material, the concrete layer, comprises of a material which displays appropriate mechanical, chemical and other functional properties to be suited for the proposed invention. The preferred material is a ultra light weight concrete (ULWC) with weight less than half that of normal concretes which typically weighs about 2400 kg/m³, that is, ULWC with density less than 1200 kg/m³ should normally be aimed for. It is to be noted that such ultra light weight concretes are significantly different from light weight concretes that earlier have been used for example for offshore structures in the North Sea, and which have a weight of approximately 1900 kg/m³.

The composition of ULWC is significantly different from that of normal concretes. To make such concretes one may use light weight aggregates in the concrete mix, such as expanded shale, clay, vermiculite, pumice (foam lava), scoria, foam glass, foam plastic, etc. There are many types of commercial light weight aggregates available. Alternatively, special chemicals may be added to obtain a large content of air or gas bubbles in the concrete mix. Combinations of light weight aggregates and air or gas bubbles may also be used. One may also add various types of fibres reinforcement to enhance the ductility and tension strength of the concrete.

To achieve good structural concretes with very low weight is rather demanding. A series of such concretes for use in the present invention has been developed and tested. The mix designs included use of water, different types of cements, silica, limestone filler, aggregates like "Liaver", "Poraver", "Perlite", "Leca", and various types of chemical additives. As an example, one of these types of concrete characteristically had fresh concrete density of 905 kg/m³, compression cube strength of 14.5 MPa, splitting tensile strength of 2.6 MPa, and Youngs moduls (E-modulus) of about 6000 MPa. This shows that ultra light weight concretes with sufficient strength to serve in the present invention can be obtained. The same mix also has good workability properties for placing in the composite plate structure.

The invention also comprises a method for improving carrying capacity of existing marine vessels. With existing marine vessels is it meant those with structures already used in constructions like ships or vessels, for instance hulls, decks or bulkheads or other structures like stiffened plates used in construction where the carrying capacity of the structure used should be improved. With existing structures one also considers ready manufactured structures like plates not yet used in a construction, but which structures should get improved carrying capacity before they are used in a construction. The improved carrying capacity includes several functions, as for instance general strength, improved capacity to withstand transverse pressure or point loads, high stiffness etc. The concrete used to fill the void created by attaching another plate element to the existing structure is a concrete with sufficient strength and appropriate density. For weight sensitive structures like ships it may be advantageous to use specially developed concretes that are significantly lighter than both normal concretes and light weight concretes.

The strength and structural integrity of the present invention not only depends on the properties of metal and concrete, but equally much on the interactive behaviour between these materials. As for normal steel ships the primary part of the strength comes from the carrying capacity of the steel. The placing of most of the metal in the layered structure at the two surfaces is an optimum solution to give the structure bending stiffness and prevent component buckling. Although the concrete in reality has some tension strength, and, in fact, the ratio between tension and compressive strength for the tested ultra light weight concretes has proved to be higher than for normal concretes, it should conservatively be assumed for design and dimensioning that the concrete does not carry significant tension forces. However, the concrete in the composite plates and walls still has several important functions:
a. To supply compressive strength and stiffness for the overall structure
b. To support the surface steel plates against buckling
c. To provide a series of other functional properties for the composite structure, such as capability of absorbing energy under catastrophic loads, fire resistance, structural damping, etc.

To enhance the concrete layers structural strength there may be added fibres into the concrete mix. The length, density and direction of the fibres may be adapted to the specific use.

Utilization of the compressive strength and stiffness capabilities of the concrete for the overall structure is rather straight forward as long as deformations and stresses are kept within requirements set by appropriate design codes (Eurocode etc.).

The function of supporting the surface metal sheets against buckling is also highly important. A conservative approach should be taken; that is, the actual design should not rely upon full bonding between concrete and metal. Resistance against separation and surface plate buckling outwards can be achieved through connectors between the sheets in the layered structure and/or dowels from one sheet into the concrete layer, in appropriate locations and with appropriate spacing between them. The concrete provides support against rotations at these anchoring points such that the holding of the surface sheet is nearly "fixed" at these points and, thereby, increases the buckling capacity of the surface sheet. The buckling capacity of the surface sheets with such fixing points can be calculated with appropriate design formulas, thereby ensuring there is sufficient capacity against buckling failure for all design conditions. In this connection it is also to be noted that surface sheets that are fixed in this way have very significant post-buckling, reserve carrying capacity that contributes towards the overall safety of the concept. It is also to be noted that in practical implementations of the current invention the surface sheets will be continuously welded to web plates at given locations and thereby ensuring line wise fixation and prevention of delamination.

A major advantage with a layered structure where the space between the metal sheets is filled with concrete is that the buckling failure that has been the cause of many shipwrecks is no longer the most critical failure mode. The hull beam may, with a layered structure in accordance with the invention be made stiffer, and by this, become more compatible with the stiff hatch structures which are designed in accordance with the Post Derbyshire requirements. This gives a more uniform stiffness for the different part of a ships structure. The design improves properties in connection with explosion, collision and grounding because the concrete is a good barrier for energy absorption and distribution of contact forces. The robust bulkheads and possible double bottom structure reduces local damage on the structure from cargo handling equipment.

Other important functional properties of the composite structure can be specified and documented through analysis of the specific designs and through laboratory testing.

When an existing marine vessel is improved according to the invention other parts of the construction like a void formed with a box girder, support stool, knee bracing or similar may also be improved in relation to carrying capacity to give the construction an overall improved performance.

To make sure that the void created by attaching the plate element is filled totally with concrete, the concrete is filled through one or several access to the void and one or several apertures are present in the proximity of the vertical highest portion of the void. By filling the void until concrete is present in the aperture(s) in the proximity of the vertical highest portion one can with high certainty say that the void is evacuated for air and fully filled with concrete. The apertures to the void may be made after the plate element is attached to the existing structure or as a consequence of the attaching of the plate element or it may be a predrilled hole in the plate element or existing structure.

Depending on the use and form of the existing structure, other plate elements may be attached to either one or both sides of the plate.

The existing marine vessel may include a stiffened structure and the voids created by attaching plate elements may be of several forms, for instance longitudinal in one or several directions. The existing structure may also be corrugated, having alternating mainly parallel ridges and grooves. The ridges and grooves may be formed with sharp angles, rounded bends or more quadrangular forms when looking at the existing structure at a cross-section. There is also the possibility that only a part of the existing structure is corrugated. Another option is that the stiffeners or grooves in the longitudinal direction only run over a part of the existing structure. This may for instance be the case for a bulkhead, where the transitional top and bottom parts of the bulkhead is made as a so-called stool structure with an internal void running mainly parallel with the bulkhead and the hull or deck, whereas the middle part is a corrugated plate structure with grooves running in a mainly vertical direction.

The invention also includes an improved corrugated plate with, on one or both sides at least one plate element attached, by welding or fastened in another way, to the ridges of the corrugated plate so that the plate element covers at least one groove and forms a void. This void is filled with concrete with density significantly less than that of normal concrete, preferably less than about 1200 kg/m³. By doing this to all the grooves on one side a smooth surface of the originally corrugated structure is created. This may be favourable for instance for corrugated structures used in bulkheads, since cargo holds should be emptied in a best possible manner and may have to be cleaned very well since different cargos should be transported in the same hold.

The invention also covers structures in vessels like for instance bulkheads, side walls, bottom structures etc with improved strength and carrying capacity made according to the method for improving existing structures.

In cases where it is necessary to increase the bonding between the metal and the concrete the surface of the metal sheet that is faced towards the concrete layer may either have increased roughness in the surface, be treated with a roughening or an adhesive layer, be equipped with dowels, or have a combination of these different means.

The dowels may be of several forms and may just reach a small distance into the concrete layer or they may reach almost to the other side of the concrete layer. The dowels may be welded, bolted or in other manner glued or fastened to the surface of the metal sheet.

In between the metal sheets in the layered structure connectors may be applied. The purpose of the connectors is to transfer loads between the metal sheets in the layered structure, and they also function as reinforcement in the layered structure. The connectors may be in the form of point connectors or it may have an extension in one or several direction, as for instance a plate girder or web. Preferably there are in the layered structure connectors in form of girders in one direction combined with point connectors in between the girders. The type and amount of connectors, point connectors or girders, will depend on the specific use of the layered structure, there are different requirements to a hull compared with a bulkhead, in relation to strength for instance against buckling.

The layered structure's concrete layer may include closed channel elements. These channels elements are in general open in both ends and have internal voids. Together with other part of the structure they may form closed voids, a box, here also denoted "spar-boxes". The channel elements are included in the concrete layer to both increase the total strength of the layered structure and also reduce the weight of the layered structure. The channel elements are connected to the adjacent metal sheets in the layered structure with spacers. The spacers can have several forms, like I-beams, U-shaped hooks or others, and they may be welded, slid, bolted or jammed into a fixed connection with both the channel element and the metal sheet. The spacers have several functions, such as to prevent surface metal sheets to buckle, transfer shear forces, as elements for transferrals of loads, and during production to hold eventual spar-boxes in the right position. The side walls (direction perpendienlar to the surface skins) may also be extended such that they may be welded to the surface skins and thereby provide direct connectivity and support for the surface skins.

The open ends of the channel elements may be connected to adjacent metal walls in the end of the layered structure or girders in the layered structure. The connection may be done by welding the channel element to for instance girders, and then there is formed an enclosed spar-box. This spar-box is normally closed, but there may be accesses to the void so that the spar-box can function as a service shaft or inspection shaft, storage of water or fuel or other liquids, or similar.

In case of designing new vessels or replacing parts of an existing vessel one may design for instance the bulkheads with a layered structure in accordance with the invention, and simultaneously dimension the spar-boxes in the layered structure so that they may function as compartments for ballast water with the required safety and access through piping and possibly also manual accesses. In other cases the layered structure for a part of a vessel may be designed so that the spar-boxes in the layered structure can function as fuel compartments.

The layered structure is normally made with metal sheets of normal grade steel used in shipbuilding. As mentioned earlier, in some cases is the content to be transported inside a cargo hold or compartment or even a spar-box, of a type that attacks or corrodes normal types of steel. In such cases the layered structure may include an outer layer of a different material that is more resistant toward the material to be transported. For example if the material to be transported is highly corrosive the layered structure may include an outer layer of stainless steel. This may be economically feasible in the case of cargo holds or tanks in accordance with the invention since the holds have smooth sides and the amount of stainless steel to cover the hold because of this will be at a minimum. Other ways of protecting the steel through painting or application of protective layers of suitable materials may also be used.

Regarding production, use and maintenance there are several factors that will be influenced by a layered structure in accordance with the invention for the whole or parts of a vessel compared with a normal steel structure in for instance a bulk carrier. The welding volume of the hull structure can, with a layered structure in accordance with the invention, be reduced by as much as 50% compared with a conventional double hull steel carrier. The hull structure can be built from fever pieces and a greater percentage of pieces may be prefabricated.

Extensive work has been carried out to verify the feasibility of the current invention. This includes design and analysis of bulk carrier ships of so-called Panmax type. All major loading and design requirements of a Classification Society have been considered in this verification. Numerical analyses with use extensive finite element models for concrete and steel were carried out. The study has proven that ships may be built according to the current invention with significantly less use of steel and welding than for conventional ships. Moreover, it has been shown that such ships even may weigh the same or less than for equivalent double hull steel ships of conventional type. Ships designed and built in accordance with the current invention also have a series of other beneficial properties including being price competitive.

It is a major benefit to achieve a hold in a bulk carrier, container ship, oil or gas tanker or chemical carrier or other types of cargo ships with smooth sides and a minimum of corners, as one can achieve with the layered structure in accordance with the invention. The smooth sides allows for easy, more speedy and more environmentally friendly cleaning, which will give an economic benefit with both less use of chemicals, hours of work and down time for the vessel due to the cleaning operation. A smooth cargo hold tank may also give the possibility of using the same cargo hold for both cargo and ballast water since the cleaning may be done properly. The smooth sides of the bulkheads and the hulls etc, also reduces cost in relation to maintenance, both due to the reduced area that have to be coated for protection against corrosion but also due to the fact that there are less areas exposed to corrosion, and less areas that have to be checked during inspection and maintenance procedures.

The layered structure in accordance with the invention gives improved performance in case of fire, since the concrete has good fire protection capacity. One may also embed the piping necessary on the ship in the concrete layer of the layered structure or in the voids in the concrete structure and thereby avoid, prevent or at least limit corrosion and enhancing fire protection.

The layered structure in accordance with the invention may as it is described above consist of a compact layered structure with two sheets of metal and an intervening layer of concrete with weight preferably below 1200 kg/m³. This structure may be considered to be similar to a double hull structure in it self due to the fact that the layered structure have two sheets of metal in the structure, and in addition has a core material of importance for collision and grounding performance.

Method for producing an element for forming a layered structure for building of whole or parts of a marine vessel uses pairs of mainly parallel metal sheets, where the metal sheets are set in a wanted distance, and that there in between these two sheets is injected a intervening layer of concrete, which concrete has density less than for normal concrete, preferably less than about 1200 kg/m³, and that the intervening layer of concrete thereafter is allowed to cure. A preferred embodiment of this comprises before the injection of the concrete, that an open channel element is attached to at least one edge of the element in the centre portions of the aperture between the two metal plates.

In the further description the invention will be explained with detailed examples and with reference to the accompanying drawings where;
Fig. 1 shows a vessel built with parts in a layered structure in accordance with the invention where part of the hull are removed to show the invention,
Fig. 2 shows details of the vessel in fig. 1,
Fig. 3 a-c shows cross-sections of three different embodiments of a vessel where the layered structure in accordance with the invention is used for whole or part of the vessel,
Fig. 4 shows the layered structure of a marine vessel in accordance with the invention,
Fig. 5 shows a second embodiment of the layered structure of a marine vessel in accordance with the invention,
Fig. 6 shows a third embodiment of the layered structure of a marine vessel in accordance with the invention,
Fig. 7 and 8 shows different embodiments of an element in accordance with the invention,
Fig. 9 shows part of a layered structure module,
Fig. 10 shows a perspective view of a part of a bulkhead improved in accordance with the invention,
Fig. 11 shows a cross-section of a part of an improved corrugated plate,
Fig. 12 shows a cross-section of a part of an improved structure with stiffening means.
Fig. 13 a-d shows different embodiments of dowels used in the invention,
Fig. 14 a-d shows different embodiments of connectors used in the invention.

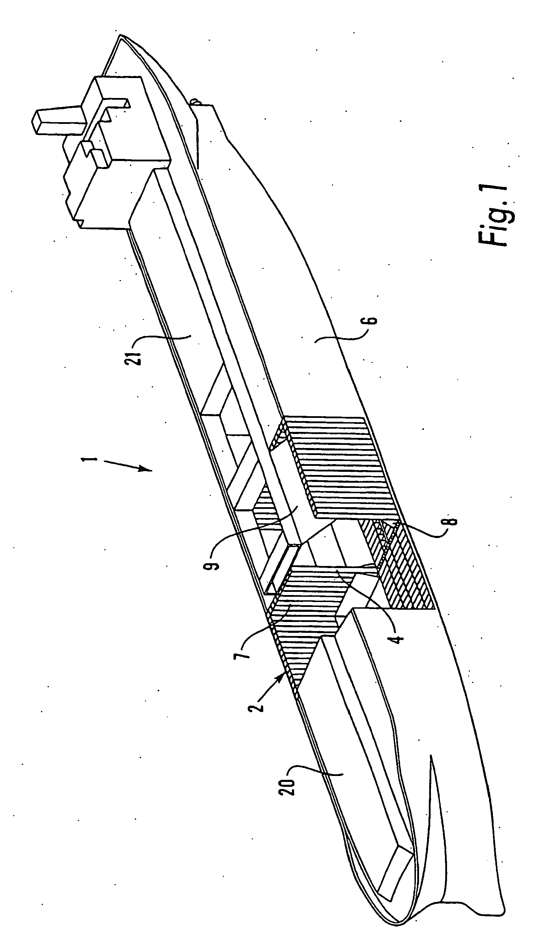

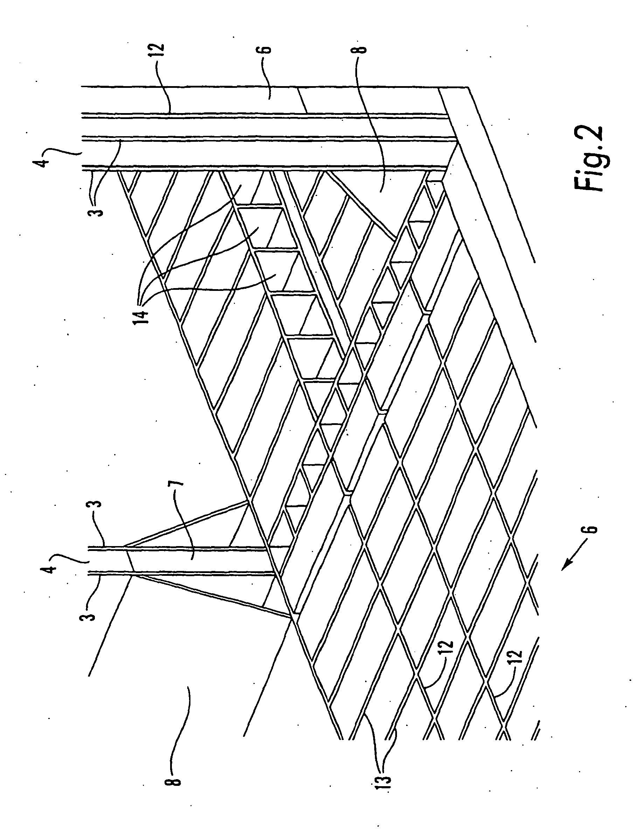

Fig. 1 and fig. 2 shows a vessel I where parts of the vessel 1 are constructed with a layered structure 2 in accordance with the invention. Part of the hull 6, parts of the deck 20 and some hatches 21 are removed to show the layered structure 2 used in the hull 6, the bulkheads 7, the wing tanks 9, and the hopper tanks 8. The hull 6 and the bulkheads 7 of the vessel 1 are designed with a layered structure 2 comprising two metal sheets 3 and a intervening concrete layer 4. One side of the wing tanks 9 and the hopper tanks 8 are design with a metal plate. It is to be noted that wing tanks and hopper tanks may be required for functional reasons, but are not necessary as a structural component of ships designed according to the invention.

As shown in fig. 2 the main structure of the ship comprises the layered structure in the vertical directed parts of the hull 6 and the bulkheads 7, plate girders 12 that extends in a vertical direction. The bottom part of the hull 6, have a layered structure comprising plate girders 12 in the longitudinal direction of the vessel and closed channel elements 13, which together with the girders 12, form spar-boxes 14. It is to be noted that the spar-boxes alternatively may be oriented in the longitudinal direction of the hull for the bottom and/or the side structures.

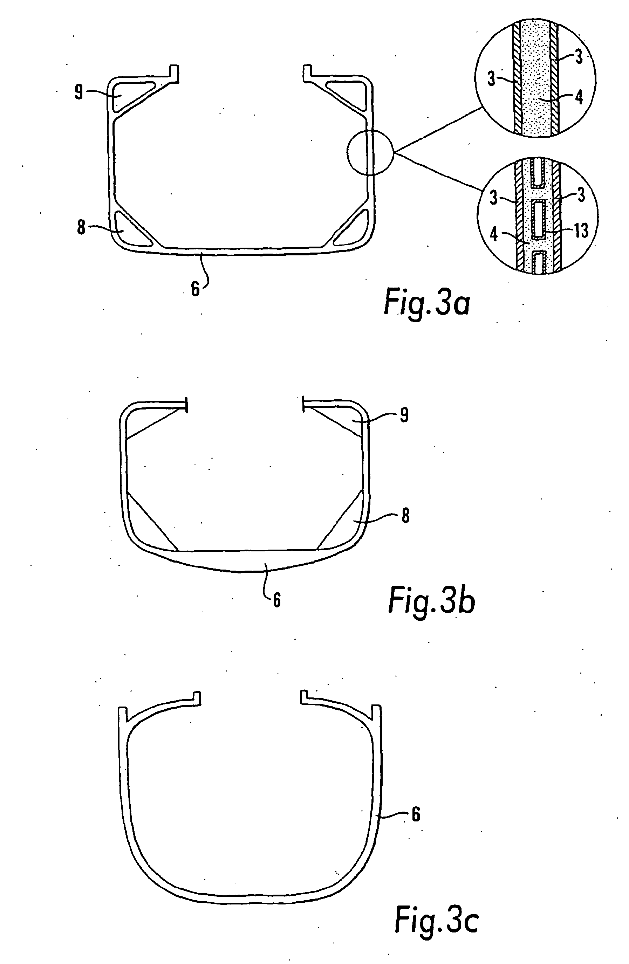

The fig. 3a-c shows three different possible cross sections for a hull where the whole or parts are formed with a layered structure in accordance with the invention. In fig. 3a are all main parts of the hull 6, also the internal wall of the hopper tanks 8 and the wing tanks 9, formed with a layered structure. As one can se in fig. 3a's two bubbles there are at least two possible layered structures that may be used in the hull, for instance a structure of two metal sheets 3 and a concrete layer 4 with or without channel elements 13. These two different structures may be used for hole or part of the hulls shown in fig. 3a-c

In fig. 3b is the inner separation wall of the wing tanks 9 and the hopper tanks 8 made with ordinary metal sheets. In fig. 3c have the hull 6 comprising a layered structure, got a more rounded shape and there are no hopper- or wing tanks, since there is no need for these with respect to structural strength.

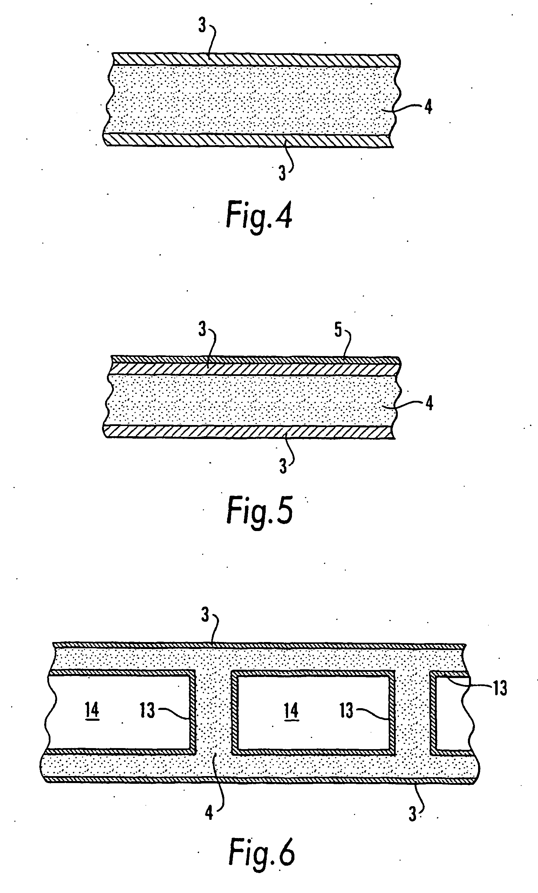

Fig. 4 is a principal sketch of the layered structure of a marine vessel in accordance with the invention, with the two metal sheets 3 and the concrete layer 4. In fig. 5 is it shown principally a second embodiment where one of the metal sheets 3 have gotten an outer layer 5 of a different material. This might be a solution if for instance the cargo that is to be transported is highly corrosive with the basic metal in the metal sheet 3. For internal walls or bulkheads both surface sheets may have a layer of a different material. These figures are not at all to scale. To illustrate typical dimensions one can mention one example for a layered hull structure, where the outer metal sheet 3 would have a thickness of between 5-25 mm and the metal sheet forming a channel element 13 embedded in the concrete layer 4 would have a thickness of between 5-10 mm.

In fig. 6 is it shown a cross section of a layered structure 2 where there are channel elements 13 embedded in the concrete layer. These channel elements forms with other parts of the layered structure spar-boxes 14. In one version of the invention the sides of the channel elements 13 that are perpendienlar to the surface sheets 3 are extended such that they can be connected directly to the surface sheets.

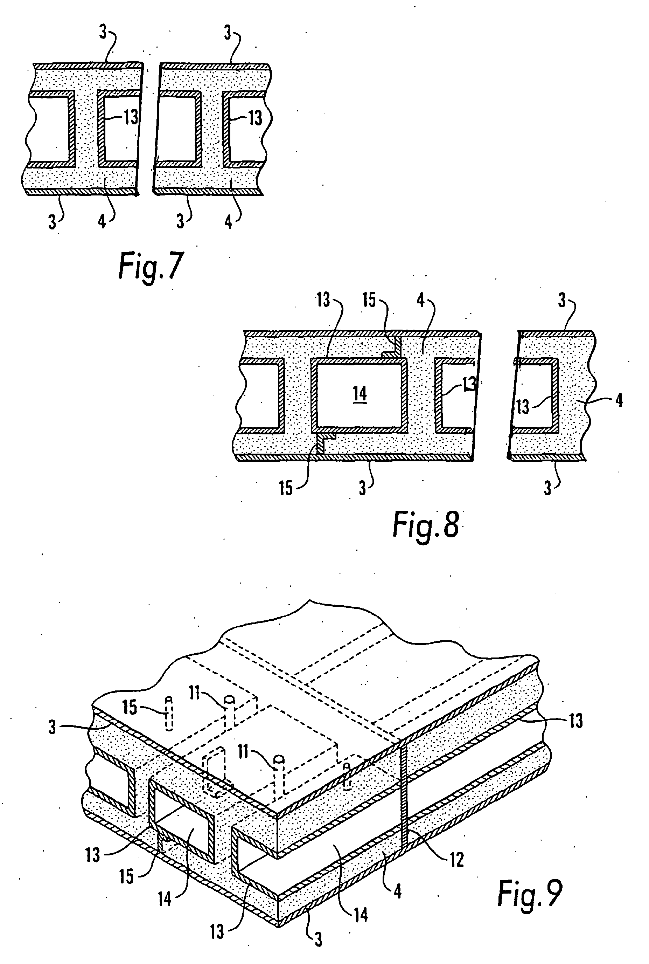

Fig. 7 and fig. 8 show two different embodiments of elements that, when mounted together form a layered structure. These elements have the same thickness as the layered structure and generally the same length as one of the directions of a layered structure module, and a part of the opposite direction of the layered structure module. The elements comprise two metal sheets 3 and a concrete layer 4. Preferred embodiments comprises also open channel elements 13 between the two metal sheets, and possibly as shown in fig. 8 also closed channel elements 13 embedded in the concrete layer 4. The channel elements are positioned in the aperture between the two metal sheets 3 with spacers 15.

A layered structure wall is comprised as shown in fig. 9 of two metal sheets 3 with a concrete layer 4 in between. The two metal sheets are connected to each other via point connectors 11 and plate girders 12. The concrete layer may comprise embedded channel elements 13 that, together with the plate girders 12, form spar-boxes 14. The channel elements are connected to the sheets with spacers 15.

The layered structure in accordance with the invention may be adapted in many ways to fit in with the requirements in the special use for the layered structure, for instance may the spar-boxes be made of a size suitable for functioning as storage tanks for fuel or ballast water.

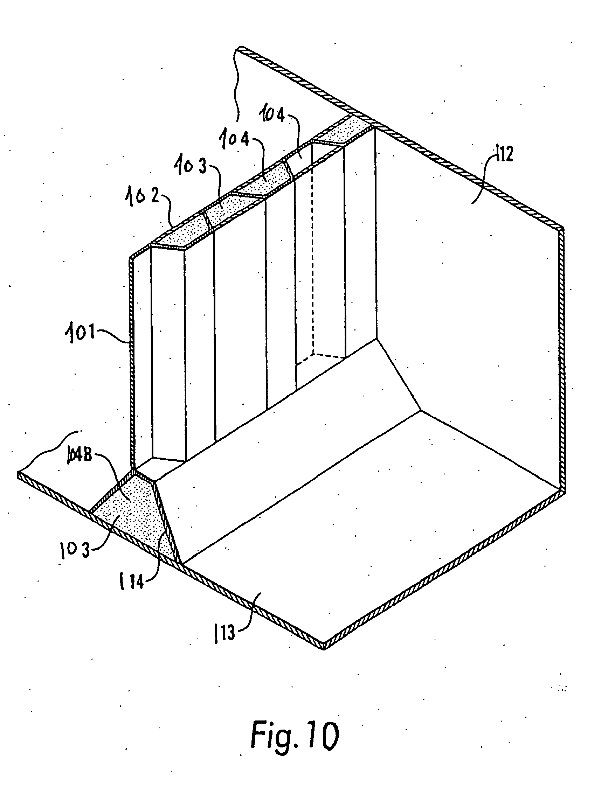

Fig. 10 shows a simplified, perspective view of a cut-out section of a ship consisting of, in parts, a bulkhead 101, a lower stool 114 for the bulkhead, a bottom plate 113, and a ship side 112. The bulkhead is made of a trapezoidal type corrugated plate 101 which is welded to the lower support stool 114 which in turn connects the bulkhead with the ship bottom structure 113.

The corrugated plating of the bulkhead is strengthened by attaching new plate elements 102 to the existing structure for forming voids 104. The thickness of the added plates 102 may be less than the thickness of the corrugated plate. The voids 104 are filled with concrete 103. In addition the void 104b in the bulkhead stool 114 is filled with concrete 103. This is to give the overall bulkhead structure matching stiffness and strength properties throughout.

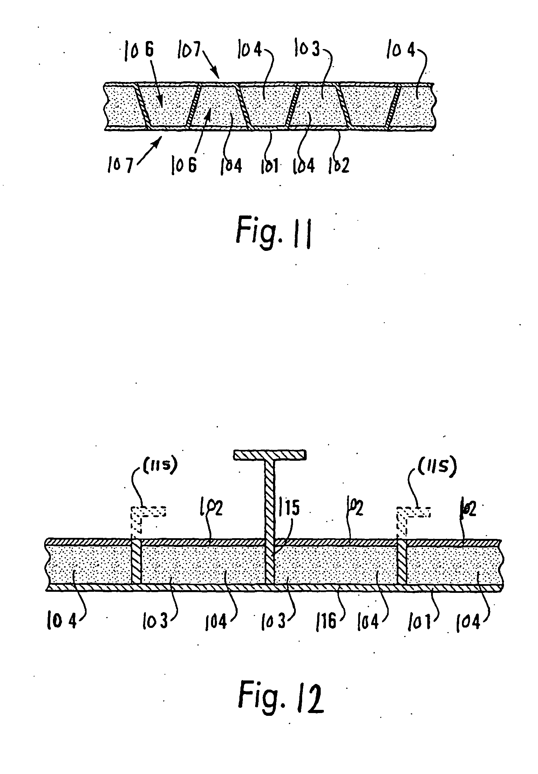

A cross-section of a part of a corrugated plate improved in accordance with the invention is shown in Fig. 11. The corrugated plate forming the existing structure 101 has grooves 106 and ridges 107. The plate elements 102 are attached or welded to the ridges 107 on both sides of the existing structure and thereby forming smooth surfaces on both sides of the corrugated plate. The voids 104 are filled with concrete 103.

Constructions like ships and marine structures are to a large degree formed with stiffened plate structures. The invention may be utilised for these constructions as well. The existing structure comprises in these cases, as shown in a cross-section in Fig. 12, of a plate 116 and stiffener means 115. The stiffener means 115 may for instance be bulb profile stiffeners or plate girders. The plate elements 102 are attached to the stiffener means to form voids 104. The voids 104 are then filled with concrete 103. The parts of the stiffener means 115 that protrudes outside the layer of attached plate elements 102 may be removed if the remaining strength is sufficient, as indicated for two of the stiffeners means 115 by dotted lines in Fig. 12. This removal may be done either before or after the plate elements 102 are attached. The removal of the parts of the stiffener means 115 results in a smooth surface, where it before the improvement with the present invention were many protruding stiffeners and corners.

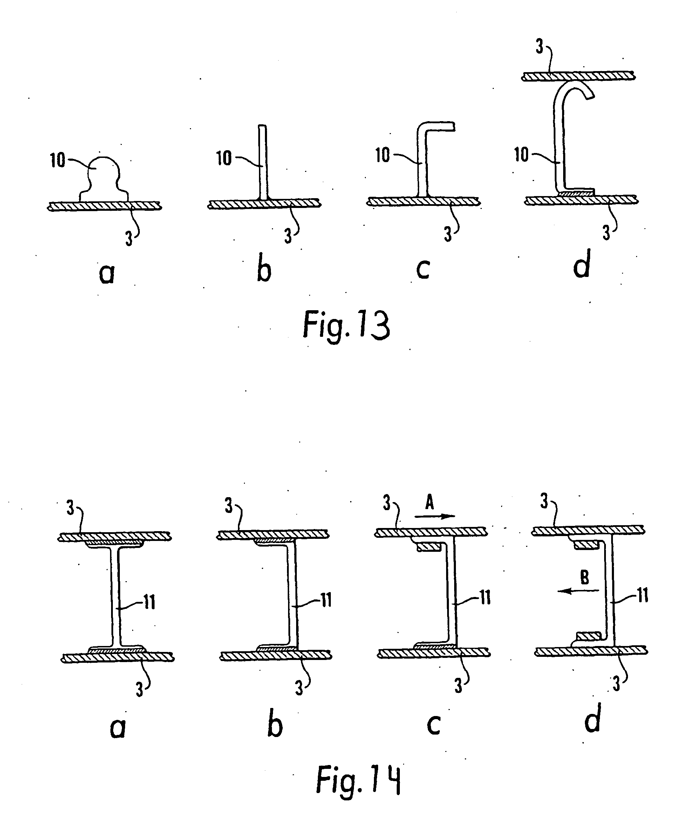

Fig. 13 shows some examples of dowels 10 that may be attached to the side of the metal sheet 3 side that faces the concrete layer, thereby improving the bonding and mechanical attachment between the two materials. Fig. 13a shows a knob 10 made of concrete, plastic or other material which is at least as strong as the concrete layer and which is glued to the metal sheet 3. Fig. 13b shows a simple steel stud 10 which is attached to the metal sheet 3 by way of arc or friction welding. Fig. 13c shows a stud or short channel section 10 which is welded to the metal sheet 3 and provides improved anchorage by way of a bent or protruded form. Fig. 13d shows a similar dowel 11 of length corresponding exactly to the desired metal sheet 3 distance, thereby serving both as anchorage and a practical spacer for the layered structure assembly.

Fig. 14 shows some examples of connectors 11 that bind the two metal sheets 3 in the layered structure together at desired distance and that also provide mechanical interaction with the concrete layer. In addition, such fixed connectors 11 are important for preventing skin buckling in case of poor bonding between concrete and metal sheets. In fig. 14a an I-form connector 11 of steel or another material, is welded to the two metal sheets 3. Fig. 14b shows a similar case where the welded connector 11 has a U-shape or open channel form. The connector 11 in fig. 14c is different in the sense that it is welded only to one sheet 3 whereas it becomes attached to the other sheet 3 through an "eye" which is a steel piece with a suitable opening for the connector and which is welded to the opposing sheet. In this way the two sheets get bound together when the opposing sheet is slid into correct position during assembly, see arrow A. The connector 11 in fig. 14d is a double-sided version of the slide connector in which both sheets 3 have "eye" attachments located at opposite positions. The outer sheets 3 become locked into position when an open channel or U-shaped connector 11 is slid into the two "eyes", see arrow B.

The present invention is now explained with examples, but several amendments and changes can be done within the scope of the inventions as defined in the following claims.

## Claims

1. Marine vessel (1), in particular ships or floating platforms, wherein the marine vessel comprises a layered structure (2) including two substantially parallel metal sheets (3) with a concrete layer (4) filled into the void therebetween, **characterized in that**
the concrete has a density less than about 1200 kg/m³, and the metal sheets on the surface facing towards the concrete layer comprise means for increasing the bonding properties or connecting properties between the metal sheets and the concrete layer.

2. Marine vessel in accordance with claims 1 wherein the means for increasing the bonding properties are an increased roughness in the surface of the metal sheets, or an added adhesive layer or dowels (11) or a combination of there.

3. Marine vessel in accordance with claim 2, wherein the dowels reach a substantial distance into the concrete layer, and at most to the metal sheet on the opposite side of the layered structure.

4. Marine vessel in accordance with claims 1, wherein in the concrete layer of the layered structure fibers are added to enhance the ductility of the concrete layer, the reduction of crack openings, and the capability for carrying tension forces.

5. Marine vessel in accordance with claims 1, wherein at least one connector (11) is provided between the two metal sheets.

6. Marine vessel in accordance with claims 5, wherein the connector comprises a point connection.

7. Marine vessel in accordance with claim 5, wherein the connector comprises girders (12, 14) in at least one direction.

8. Marine vessel in accordance with one of the preceding claims, wherein the concrete layer comprises a plurality of substantially parallel longitudinal load carrying channel elements with equal or different cross sections and with an internal void, which may, together with other elements in the layered structure, form spar-boxes (14).

9. Marine vessel in accordance with claim 8 wherein the channel elements are connected to the adjacent metal sheets with spacers (15).

10. Marine vessel in accordance with claim 8, wherein the two sides of the channel elements which are oriented perpendicular to the metal surface sheets extend beyond the closed channel form to be attached directly to the two metal sheets.

11. Marine vessel in accordance with claims 8, 9 or 10, wherein both open ends of channel elements are joined with girders with their longitudinal direction transverse to the longitudinal direction of the channel element and form closed spar-boxes.

12. Marine vessel in accordance with claim 11, wherein there is access to at least one of the spar-boxes in the layered structure, and the spar-box may function as a service shaft and/or inspection shaft or similar.

13. Marine vessel in accordance with claim 12, wherein there is access to the spar-boxes in the concrete layer in a bulkhead (7) so that the spar-boxes may function as compartments for instance for ballast water.

14. Marine vessel in accordance with claim 11, wherein there is access to the spar-boxes in the concrete layer in the layered structure, so that the spar-boxes may function as compartments for fuel.

15. Marine vessel in accordance with one of the preceding claims,
wherein one or both of the surfaces of the metal sheets facing away from the concrete layer or from the inside of a spar-box include an outer layer of a different material.

16. Method for improving the carrying capacity of existing marine vessels, with the following steps:
- attaching at least one additional plate element (102) to the existing marine vessels to form a void (104),
- filling the void with concrete (103) with a density less than about 1200 kg/m³, and
- letting the concrete cure.

17. Method according to claim 16, wherein other voids in the existing marine vessel are filled with concrete with a density less than about 1200 kg/m³.

18. Method according to claim 16 or 17, wherein, before adding the concrete, making at least one aperture in the proximity of the vertical highest portion of the void to facilitate evacuation of air and for determining when the void has been fully grouted, adding concrete to the void through at least one other access to the void.

19. Method according to claim 16 or 18, wherein plate elements are attached to both sides of a part or parts of the existing marine vessel to form voids.

20. Method according to one of the claim 16 to 19, wherein the part of the existing marine vessel is a corrugated structure having alternating mainly parallel ridges (107) and grooves (106) and the at least one additional plate element is attached such that it covers at least one groove in the corrugated plate and thereby forms at least one void.

21. Method according to claim 20, wherein the plate element covering a groove in the corrugated existing structure is attached by welding or other ways of attaching the sides of the plate element to the ridges in the corrugated structure.

22. Method according to one of the claims 16 to 18, wherein the voids are formed by plate elements attached to stiffener means being parts of the existing marine vessel.

23. Method according to claim 22, wherein the stiffener means are modified before or after plate element are attached to them to form voids.

24. Corrugated structure (101) with alternating mainly parallel ridges (107) and grooves (106), wherein the corrugated structure comprises on one or both sides at least one plate element (102), attached to the corrugated plates so that the plate element covers at least one groove and forms a void (104), which void is filled with concrete (103) with a density less than about 1200 kg/m³.

25. Corrugated structure according to claim 24, wherein all grooves on at least one side are covered by plate elements, thereby forming a smooth surface.

## Patentansprüche

1. Wasserfahrzeug (1), insbesondere Schiffe oder schwimmende Plattformen, wobei das Wasserfahrzeug eine Schichtstruktur (2) mit zwei im Wesentlichen parallelen Metallblechen (3) mit einer in die Zwischenräume dazwischen eingefüllten Betonschicht (4) enthält,
**dadurch gekennzeichnet, dass**
der Beton eine Dichte von weniger als etwa 1.200 kg/m³ aufweist und die Metallbleche an der Oberfläche, die in Richtung der Betonschicht weist, Mittel zum Erhöhen der Bindeeigenschaften oder Verbindungseigenschaften zwischen den Metallblechen und der Betonschicht aufweisen.

2. Wasserfahrzeug nach Anspruch 1, wobei die Mittel zum Erhöhen der Bindeeigenschaften eine erhöhte Rauhigkeit in der Oberfläche der Metallbleche oder eine hinzugefügte Klebeschicht oder Dübel (11) oder eine Kombination davon sind.

3. Wasserfahrzeug nach Anspruch 2, wobei die Dübel einen wesentlichen Weg in die Betonschicht und höchstens zu dem Metallblech auf der gegenüberliegenden Seite der Schichtstruktur erreichen.

4. Wasserfahrzeug nach Anspruch 1, wobei in die Betonschicht der Schichtstruktur Fasern hinzugefügt sind, um die Dehnbarkeit der Betonschicht, die Reduktion von Rissöffnungen und die Möglichkeit zum Aufnehmen von Spannungskräften zu verbessern.

5. Wasserfahrzeug nach Anspruch 1, wobei zumindest ein Verbinder (11) zwischen den zwei Metallblechen vorgesehen ist.

6. Wasserfahrzeug nach Anspruch 5, wobei der Verbinder eine Punktverbindung aufweist.

7. Wasserfahrzeug nach Anspruch 5, wobei der Verbinder Träger (12, 14) in zumindest einer Richtung aufweist.

8. Wasserfahrzeug nach einem der vorstehenden Ansprüche, wobei die Betonschicht eine Mehrzahl im Wesentlichen paralleler, längs verlaufender, Last aufnehmender Kanalelemente mit gleichen oder verschiedenen Querschnitten und mit einem inneren Hohlraum umfasst, die zusammen mit anderen Elementen in der Schichtstruktur Kastenträger (14) bilden können.

9. Wasserfahrzeug nach Anspruch 8, wobei die Kanalelemente mit den benachbarten Metallblechen mit Abstandshaltern (15) verbunden sind.

10. Wasserfahrzeug nach Anspruch 8, wobei sich die zwei Seiten der Kanalelemente, die senkrecht zu den metallischen Oberflächenblechen ausgerichtet sind, über die geschlossene Kanalform hinaus erstrecken, um direkt an den zwei Metallblechen angebracht zu sein.

11. Wasserfahrzeug nach Ansprüchen 8, 9 oder 10, wobei beide offenen Enden von Kanalelementen mit Trägern verbunden sind, deren Längsrichtung quer zu der Längsrichtung des Kanalelements ist, und geschlossene Kastenträger bilden.

12. Wasserfahrzeug nach Anspruch 11, wobei es einen Zugang zu mindestens einem der Kastenträger in der Schichtstruktur gibt und der Kastenträger als ein Wartungsschaft und/oder Inspektionsschaft oder Ähnliches funktionieren kann.

13. Wasserfahrzeug nach Anspruch 12, wobei es einen Zugang zu den Kastenträgern in der Betonschicht in einer Querwand (7) gibt, sodass die Kastenträger als Kammern z.B. für Wasserballast funktionieren können.

14. Wasserfahrzeug nach Anspruch 11, wobei es einen Zugang zu den Kastenträgern in der Betonschicht in der Schichtstruktur gibt, sodass die Kastenträger als Kammern für Treibstoff funktionieren können.

15. Wasserfahrzeug nach einem der vorstehenden Ansprüche, wobei eine oder beide der Oberflächen der Metallbleche, die von der Betonschicht oder von dem Inneren eines Kastenträgers weg gerichtet sind, eine äußere Schicht eines unterschiedlichen Materials enthalten.

16. Verfahren zum Verbessern der Aufnahmekapazität von bestehenden Wasserfahrzeugen mit den folgenden Schritten:
- Anbringen zumindest eines zusätzlichen Plattenelements (102) an die bestehenden Wasserfahrzeuge, um einen Hohlraum (104) zu bilden,
- Füllen des Hohlraums mit Beton (103) mit einer Dichte von weniger als etwa 1.200 kg/m³, und
- Aushärtenlassen des Betons.

17. Verfahren nach Anspruch 16, wobei andere Hohlräume in dem bestehenden Wasserfahrzeug mit Beton mit einer Dichte von weniger als etwa 1.200 kg/m³ gefüllt werden.

18. Verfahren nach Anspruch 16 oder 17, wobei vor dem Hinzufügen des Betons zumindest eine Öffnung in der Nähe des vertikal höchsten Abschnitts des Hohlraums gemacht wird, um ein Abfördern von Luft zu erleichtern und zum Bestimmen, wenn der Hohlraum vollständig zementiert ist, wobei Beton in den Hohlraum durch zumindest einen anderen Zugang zu dem Hohlraum zugefügt wird.

19. Verfahren nach Anspruch 16 oder 18, wobei Plattenelemente an beide Seiten eines Teils oder von Teilen des bestehenden Wasserfahrzeugs angebracht werden, um Hohlräume zu bilden.

20. Verfahren nach einem der Ansprüche 16 bis 19, wobei der Teil des bestehenden Wasserfahrzeugs eine geriffelte Struktur mit abwechselnd hauptsächlich parallelen Graten (107) und Nuten (106) ist und das zumindest eine zusätzliche Plattenelement derart angebracht wird, dass es zumindest eine Nut in der geriffelten Platte abdeckt und **dadurch** zumindest einen Hohlraum bildet.

21. Verfahren nach Anspruch 20, wobei das Plattenelement, das eine Nut in der geriffelten existierenden Struktur abdeckt, durch Schweißen oder andere Befestigungswege der Seiten des Plattenelements an den Graten in der geriffelten Struktur angebracht wird.

22. Verfahren nach einem der Ansprüche 16 bis 18, wobei die Hohlräume durch Plattenelemente gebildet werden, die an Versteifungsmitteln angebracht werden, die Teile des bestehenden Wasserfahrzeugs sind.

23. Verfahren nach Anspruch 22, wobei die Versteifungsmittel bevor oder nachdem Plattenelemente an ihnen angebracht werden, um Hohlräume zu bilden, modifiziert werden.

24. Geriffelte Struktur (101) mit abwechselnd hauptsächlich parallelen Graten (107) und Nuten (106), wobei die geriffelte Struktur auf einer oder beiden Seiten zumindest ein Plattenelement (102) aufweist, das an den geriffelten Platten derart angebracht ist, dass das Plattenelement zumindest eine Nut abdeckt und einen Hohlraum (104) bildet, welcher Hohlraum mit Beton (103) mit einer Dichte von weniger als etwa 1.200 kg/m³ gefüllt ist.

25. Geriffelte Struktur nach Anspruch 24, wobei alle Nuten an zumindest einer Seite von Plattenelementen bedeckt sind, wodurch eine glatte Oberfläche gebildet wird.

## Revendications

1. Bâtiment marin (1), en particulier des navires ou plates-formes flottantes, dans lequel le bâtiment marin comprend une structure stratifiée (2) comprenant deux feuilles métalliques sensiblement parallèles (3) avec une couche de béton (4) remplissant le vide entre celles-ci, **caractérisé en ce que**
le béton possède une densité inférieure à environ 1 200 kg/m³, et les feuilles métalliques sur la surface tournée vers la couche de béton comprennent des moyens pour augmenter les propriétés de liaison ou les propriétés de connexion entre les feuilles métalliques et la couche de béton.

2. Bâtiment marin selon la revendication 1, dans lequel les moyens pour augmenter les propriétés de liaison sont une rugosité plus importante dans la surface des feuilles métalliques, ou une couche adhésive supplémentaire ou des goujons (11) ou une association de ceux-ci.

3. Bâtiment marin selon la revendication 2, dans lequel les goujons couvrent une distance importante dans la couche de béton, et au plus jusqu'à la feuille métallique sur le côté opposé de la structure stratifiée.

4. Bâtiment marin selon la revendication 1, dans lequel, dans la couche de béton de la structure stratifiée, des fibres sont ajoutées pour améliorer la, ductilité de la couche de béton, la réduction d'ouvertures fissurées, et la capacité de supporter des forces de tension.

5. Bâtiment marin selon la revendication 1, dans lequel au moins un connecteur (11) est prévu entre les deux feuilles métalliques.

6. Bâtiment marin selon la revendication 5, dans lequel le connecteur comprend une connexion à point.

7. Bâtiment marin selon la revendication 5, dans lequel le connecteur comprend des supports (12, 14) dans au moins une direction.

8. Bâtiment marin selon une des revendications précédentes, dans lequel la couche de béton comprend une pluralité d'éléments de canal porteurs longitudinaux sensiblement parallèles avec des sections transversales égales ou différentes et avec un vide interne, qui peuvent, conjointement à d'autres éléments dans la structure stratifiée, former des caissons (14).

9. Bâtiment marin selon la revendication 8, dans lequel les éléments de canal sont connectés aux feuilles métalliques adjacentes avec des entretoises (15).

10. Bâtiment marin selon la revendication 8, dans lequel les deux côtés des éléments de canal qui sont orientés perpendiculairement aux feuilles de surface métalliques s'étendent au-delà de la forme de canal fermée pour être fixés directement aux deux feuilles métalliques.

11. Bâtiment marin selon les revendications 8, 9 ou 10, dans lequel les deux extrémités ouvertes des éléments de canal sont jointes à des supports avec leur direction longitudinale transversale à la direction longitudinale des éléments de canal et forment des caissons fermés.

12. Bâtiment marin selon la revendication 11, dans lequel il y a un accès à au moins un des caissons dans la structure stratifiée, et le caisson peut servir de gaine technique et/ou gaine d'inspection ou similaire.

13. Bâtiment marin selon la revendication 12, dans lequel il y'a un accès aux caissons dans la couche de béton dans une cloison (7) de sorte que les caissons puissent servir de compartiments par exemple pour de l'eau de lest.

14. Bâtiment marin selon la revendication 11, dans lequel il y a un accès aux caissons dans la couche de béton dans la structure stratifiée, de sorte que les caissons puissent servir de compartiments pour du carburant.

15. Bâtiment marin selon une des revendications précédentes, dans lequel une ou les deux surfaces des feuilles métalliques tournées dans une direction opposée par rapport à la couche de béton ou par rapport à l'intérieur d'un caisson comprennent une couche externe d'un matériau différent.

16. Méthode pour améliorer la capacité de charge de bâtiments marins existants (101), avec les étapes suivantes consistant à :
- fixer au moins un élément de plaque supplémentaire (102) au bâtiment marin existant pour former un vide (104),
- remplir le vide avec du béton (103) avec une densité inférieure à environ 1 200 kg/m³, et
- laisser sécher le béton.

17. Méthode selon la revendication 16, dans laquelle d'autres vides dans le bâtiment marin existant sont remplis avec du béton avec une densité inférieure à environ 1 200 kg/m³.

18. Méthode selon la revendication 16 ou 17, dans laquelle, avant d'ajouter le béton, au moins une ouverture est réalisée dans la proximité de la partie la plus haute verticale du vide pour faciliter l'évacuation d'air et pour déterminer l'instant auquel le vide a été complètement rempli, du béton étant ajouté dans le vide à travers au moins un autre accès au vide.

19. Méthode selon la revendication 16 ou 18, dans laquelle des éléments de plaque sont fixés aux deux côtés d'une partie ou de parties du bâtiment marin existant pour former des vides.

20. Méthode selon une des revendications 16 à 19, dans laquelle la partie du bâtiment marin existant est une structure ondulée possédant des crêtes (107) et des rainures (106) alternées essentiellement parallèles et l'au moins un élément de plaque supplémentaire est fixé de sorte qu'il recouvre au moins une rainure dans la plaque ondulée et ainsi forme au moins un vide.

21. Méthode selon la revendication 20, dans laquelle l'élément de plaque recouvrant une rainure dans la structure existante ondulée est fixé par soudage ou autres manières de fixer les côtés de l'élément de plaque aux crêtes dans la structure ondulée.

22. Méthode selon une des revendications 16 à 18, dans laquelle les vides sont formés par des éléments de plaque fixés à des moyens de renforcement faisant partie du bâtiment marin existant.

23. Méthode selon la revendication 22, dans laquelle les moyens de renforcement sont modifiés avant ou après que les éléments de plaque y sont fixés pour former des vides.

24. Structure ondulée (101) avec des crêtes (107) et des rainures (106) alternées essentiellement parallèles, dans laquelle la structure ondulée comprend sur un ou les deux côtés au moins un élément de plaque (102), fixé aux plaques ondulées, de sorte que l'élément de plaque recouvre au moins une rainure et forme un vide (104), lequel vide est rempli de béton (103) avec une densité inférieure à environ 1 200 kg/m³.

25. Structure ondulée selon la revendication 24, dans laquelle toutes les rainures sur au moins un côté sont recouvertes par des éléments de plaques, formant ainsi une surface lisse.
